# EUROPÄISCHE PATENTSCHRIFT

(11) **EP 3 387 228 B1**
(45) Veröffentlichungstag und Bekanntmachung des Hinweises auf die Patenterteilung: **27.11.2019**
(21) Anmeldenummer: 16806146.3
(22) Anmeldetag: 07.12.2016
(51) Int. Cl.: F01N 3/20

(54) **TANKSYSTEM FÜR EIN REDUKTIONSMITTEL**
TANK SYSTEM FOR A REDUCING AGENT
SYSTÈME DE STOCKAGE POUR AGENT DE RÉDUCTION

(30) Priorität: 10.12.2015 DE 102015224919
(43) Veröffentlichungstag der Anmeldung: 17.10.2018
(73) Patentinhaber: CPT Group GmbH, 30165 Hannover (DE)
(72) Erfinder: BRÜCK, Rolf, 51429 Bergisch Gladbach (DE)
(86) Internationale Anmeldenummer: PCT/EP2016/080024
(87) Internationale Veröffentlichungsnummer: WO 2017/097814

(56) Entgegenhaltungen:
- EP-A2- 2 336 515
- WO-A1-2015/036290
- DE-A1-102010 029 594
- DE-A1-102011 006 105
- DE-A1-102012 110 760

## Beschreibung

Gegenstand der Erfindung ist ein Tanksystem für ein Reduktionsmittel, umfassend einen Behälter für das Reduktionsmittel mit einer oberen Behälterwandung, seitlichen Behälterwandungen und einer unteren Behälterwandung, eine Fördervorrichtung, um das Reduktionsmittel anzusaugen und unter Druck über einen Auslass einem Abgas zuführbar bereitzustellen.

Es ist bekannt, Reduktionsmittel den Abgasen von Kraftfahrzeugen zuzugeben, um unerwünschte Bestandteile des Abgases, insbesondere Stickoxidverbindungen, zu reduzieren, indem sie in andere Verbindungen, wie Stickstoff, Wasser und Kohlendioxid umgewandelt werden. Als Reduktionsmittel wird hierbei Harnstofflösung verwendet, die auch unter dem Handelsnamen AdBlue erhältlich ist. Für die Bereitstellung und Bevorratung der Harnstofflösung ist in Kraftfahrzeugen ein Behälter vorgesehen. Dieser ist mit einer Fördervorrichtung verbunden. Die Fördervorrichtung besteht aus einer Pumpe, die das Reduktionsmittel ansaugt und unter Druck in eine Förderleitung abgibt. Über die Förderleitung gelangt die Harnstofflösung zu einer Einspritzvorrichtung, welche die Harnstofflösung in eine Abgasleitung und das darin strömende Abgas einspritzt. Die Fördervorrichtung weist weitere Komponenten, wie Füllstandsgeber, Sensoren, Filter und Heizvorrichtungen auf, die für den sicheren und zuverlässigen Betrieb des Tanksystems vorgesehen sind.

Es ist weiter bekannt, im Behälter eine Öffnung einzubringen, um die Fördervorrichtung im Innern des Behälters anzuordnen. Mittels eines Flansches ist die Öffnung im Behälter verschließbar. Über einen in den Flansch integrierten Auslass wird die von der Fördervorrichtung geförderte Harnstofflösung aus dem Behälter heraus und zur Abgasleitung geführt. Nachteilig ist, dass bei einer Anordnung der Fördervorrichtung durch eine Öffnung im Boden des Behälters eine vollständige Entleerung des Behälters nicht möglich ist. Selbst wenn die Fördervorrichtung bis auf wenige Millimeter Füllstandhöhe im Behälter diesen entleeren kann, verbleibt aufgrund der Bodenfläche ein erhebliches, nicht förderbares Restvolumen im Behälter.

Aus der DE 10 2011 006105 A1 ist eine Funktionseinheit für einen Reduktionsmittel-Vorratstank bekannt, wobei die Funktionseinheit eine Heizvorrichtung aufweist. Bevorzugt weist die Einheit einen Wärmeverteiler mit einem Hohlraum auf, in welchen ein Heizelement und/oder wenigstens eine weitere Komponente, wie beispielsweise eine Pumpe und/oder ein Füllstandsensor aufgenommen werden kann.

Die DE 10 2010 029594 A1 offenbart eine Vorrichtung zur Entnahme von Fluid aus einem Tank, mit einem Filterelement, das ausgebildet ist, um aus dem Tank zu entnehmendes Fluid zu filtern, und mit einem Heizelement. Das Heizelement und das Filterelement sind derart in der Vorrichtung angeordnet, dass im Betrieb wenigstens ein Bereich des Heizelementes in Kontakt mit Fluid ist, das durch das Filterelement gefiltert ist.

Die EP 2 336 515 A2 offenbart eine Dosiervorrichtung für ein Reduktionsmittel, mit einem Tank, einem Einlass, einem Auslass, einer Heizvorrichtung in dem Tank, einem Filterelement, welches zwischen dem Auslass und dem im Tank befindlichen Reduktionsmittel angeordnet ist und ein Wärmeleitobjekt, welches in thermischen Kontakt mit der Heizvorrichtung steht und zwischen dem Filterelement und dem Auslass angeordnet ist.

Die DE 10 2012 110760 A1 offenbart eine Vorrichtung zur Bereitstellung eines flüssigen Additivs, aufweisend zumindest einen Tank und eine Entnahmeeinheit zur Förderung des flüssigen Additivs aus dem Tank zu einem Additivverbraucher, wobei der Tank eine Tankwand aufweist und die Entnahmeeinheit an einem Montageabschnitt der Tankwand montiert ist, wobei die Tankwand aus Spritzgussmasse besteht und im Bereich des Montageabschnittes integrierte Versteifungsstrukturen in der Spritzgussmasse vorgesehen sind.

Die WO 2015/036290 A1 offenbart eine Dosiervorrichtung mit einer in eine untere Öffnung eines Tanks eingesetzten Fördermoduls, wobei die Fördervorrichtung entlang einer Leitung ein Fluid aus dem Tank durch einen Filter hinausfördern kann.

Der Erfindung liegt daher die Aufgabe zugrunde, ein Tanksystem der eingangs genannten Art zu schaffen, mit dem eine nahezu vollständige Entleerung des Behälters möglich ist. Das Tanksystem soll dabei die Entleerung des Behälters mit geringem Aufwand ermöglichen.

Erfindungsgemäß wird die Aufgabe dadurch gelöst, dass im Bodenbereich des Behälters eine Öffnung vorgesehen ist, dass an der Außenseite des Behälters die Fördervorrichtung derart angeordnet ist, dass sie mit der Außenseite des Behälters einen Raum S bildet, wobei dieser Raum S über die eine Öffnung mit dem Innern des Behälters verbunden ist, so dass in dem Behälter befindliches Reduktionsmittel aus dem Innern des Behälters in den außerhalb des Behälters befindlichen Raum S gelangen kann und durch die Fördervorrichtung aus dem Raum S ansaugbar ist, dass ein von der Fördervorrichtung getrennter Träger an der Öffnung vorgesehen ist und dass der Träger mit weiteren Komponenten verbunden ist, wobei die Fördervorrichtung einen sie umgebenden Flansch aufweist, und der Flansch zur Bildung des Raumes S mit der Außenseite des Behälters verbunden ist, wobei an der Öffnung Mittel zum Verbinden des Trägers mit der unteren Behälterwandung angeordnet sind, wobei die Mittel als Erhebungen ausgebildet sind, die entsprechende Ausnehmungen des Trägers durchdringen und mittels Heißverstemmen derart verformbar sind, dass der Träger zur Öffnung positioniert ist.

Mit der Anordnung der Fördervorrichtung an der Außenseite des Behälters bildet diese mit der Außenseite einen Raum S. Der Raum S ist mit dem Inneren des Behälters über die eine Öffnung in der Behälterwandung verbunden, wobei diese Öffnung in dem Bereich des Behälterbodens angeordnet ist, wo Außenseite des Behälters und Fördervorrichtung den Raum S bilden. Die Öffnung ermöglicht das Einströmen des Reduktionsmittels in den Raum S, wo es von der Fördervorrichtung angesaugt und zur Abgasleitung des Kraftfahrzeugs gefördert wird. Die Anordnung der Fördervorrichtung außerhalb des Behälters erlaubt einen besonders tiefen Ansaugpunkt, so dass sich der Behälter nahezu vollständig entleeren lässt. Damit lassen sich mit dem erfindungsgemäßen Tanksystem Behälter mit sehr großem Nutzvolumen realisieren. Mit der Anordnung von Komponenten auf dem Träger kann die Fördervorrichtung kleiner gestaltet werden, zur Reduzierung des notwendigen Bauraums.

Die Verbindung der Fördervorrichtung mit der Außenseite des Behälters gestaltet sich besonders einfach, wenn die Fördervorrichtung, insbesondere deren Flansch mit dem Behälter verklebt oder verschweißt ist. Bei einer solchen flüssigkeitsdichten Verbindung können zusätzliche Dichtelemente entfallen. Das Tanksystem ist dadurch einfacher und kostengünstiger aufgebaut.

In einer anderen Ausgestaltung ist die Verbindung von Fördervorrichtung und Behälter als Bajonettverbindung ausgebildet. Hierzu weist der Flansch ein metallisches Einlegeteil auf, welches mit einem entsprechenden Gegenstück, das im Behälterboden angeordnet ist, in Eingriff gebracht wird. Der Vorteil dieser Verbindung besteht darin, dass die Fördervorrichtung insbesondere zur Reparatur und/oder Wartung ohne zusätzlichen Aufwand vom Behälter getrennt und anschließend wieder flüssigkeitsdicht mit ihm verbunden werden kann.

Um auch bei gefülltem Behälter die Zugänglichkeit zu allen oder einige Komponenten zu gewährleisten, hat es sich als vorteilhaft erwiesen, dass die Fördervorrichtung ein Gehäuse umfasst, in dem diese Komponenten angeordnet sind. Das Gehäuse ist zu diesem Zweck mit einem Deckel oder einer Abdeckung versehen. Die Zugänglichkeit ist somit unabhängig vom Füllstand im Behälter, auch ein Ausbau des Behälters ist nicht erforderlich.

Nicht erfindungsgemäß kann auch der Träger über einen Bajonettverschluss mit der unteren Behälterwandung verbunden sein. Sofern für den Bajonettverschluss ein Einlegeteil in der unteren Behälterwandung vorgesehen ist, kann dies gemäß einer anderen Ausgestaltung einteilig mit dem Einlegeteil für die Verbindung mit der Fördervorrichtung ausgebildet sein.

Mit der Anordnung des Trägers an der Öffnung kann es unter bestimmten Umständen gewünscht sein, ein definiertes Austreten des Reduktionsmittels aus dem Behälter hinein in den Raum S zu erzeugen. Ein undefiniertes Überströmen lässt sich dadurch verhindern, dass der Träger eine Dichtung besitzt, welche die Öffnung umgibt.

Die Aufgabe der Öffnungen besteht darin, ausreichend Reduktionsmittel aus dem Behälter in den außerhalb des Behälters befindlichen Raum S durchtreten zu lassen. Um dies zu gewährleisten, muss der Querschnitt aller Öffnungen ausreichend groß. Ein Maß für die Querschnittsfläche ist die Porosität des Bereichs des Behälters, der mit der Fördervorrichtung den Raum S bildet. Die Porosität ergibt sich aus dem Anteil der Querschnittsflächen aller Öffnungen zur Gesamtfläche dieses Behälterbereichs. Die Porosität kann dabei 95 % bis 2 %, vorzugsweise 80 % bis 4 % und insbesondere 50 % bis 6 % betragen. Bei großen Flächen des Behälterbereichs ist die Porosität kleiner und bei kleineren Flächen größer.

Zum Schutz der Fördervorrichtung und der nachfolgenden Einspritzung der Harnstofflösung in das Abgas ist ein Filter vorgesehen. Mit der Anordnung des Filters an der Fördervorrichtung wird die Gestaltung des Filters bereits vorgegeben und es steigt die Komplexität der Fördervorrichtung. Gemäß einer vorteilhaften Ausgestaltung lässt sich die Komplexität der Fördervorrichtung reduzieren, wenn der Filter an dem Träger angeordnet ist. Eine mögliche Ausgestaltung besteht, den Träger als Grundrahmen mit zumindest einer Öffnung vorzusehen und den Filter derart anzuordnen, dass er die Öffnungen überspannt oder abdeckt, so dass das aus dem Behälter austretende Reduktionsmittel gefiltert ist. Somit befindet sich im Behälter ungefiltertes und im Raum S gefiltertes Reduktionsmittel.

Gemäß einer weiteren vorteilhaften Ausgestaltung ist der Träger mit einem Füllstandssensor, vorzugsweise einem Ultraschallsensor verbunden. Die von der Fördervorrichtung getrennte Anordnung hat den Vorteil, dass der Füllstandssensor nicht durch den Träger hindurch messen muss. Eine Beeinflussung durch den Träger ist damit ausgeschlossen. Zudem erlaubt der Träger eine Positionierung des Füllstandssensors außerhalb seines Umfangs, wodurch Anpassungen an verschiedene Behälterformen ermöglicht werden.

In einer weiteren vorteilhaften Ausgestaltung ist der Träger mit einem Qualitätssensor verbunden, was ebenfalls die Anpassung an verschiedene Behälterformen ermöglicht.

In einer anderen Ausgestaltung erstreckt sich der am Träger angeordnete Qualitätssensor in den Raum S hinein. Damit wird die Qualität des gefilterten und somit reinen Reduktionsmittels und nicht die des ungefilterten Reduktionsmittel bestimmt.

Um ein Einfrieren der Harnstofflösung im Betrieb zu verhindern oder um ein schnelleres Auftauen gefrorener Harnstofflösung zu ermöglichen, ist gemäß einer weiteren vorteilhaften Ausgestaltung der Träger mit einer Heizvorrichtung verbunden. Die Anordnung am Träger ermöglicht größere Gestaltungsmöglichkeiten und Anpassung der Heizvorrichtung an den Behälter. Gleichzeitig wird durch die Anordnung am Träger auch der Raum S mit beheizt, so dass eine separate Heizung nicht erforderlich ist.

In einer anderen Ausgestaltung weist der Bereich des Behälters, der mit der Fördervorrichtung den Raum S bildet, zumindest eine in das Innere des Behälters gerichtete Einstülpung auf. Das hat den Vorteil, dass die Fördervorrichtung in diese Einstülpung eintauchen kann, wobei sie aber immer noch außerhalb des Behälters angeordnet ist. Aufgrund dieser Anordnung wird es ermöglicht, dass die Fördervorrichtung vollständig in der Einstülpung angeordnet werden kann. Ein derartiges Tanksystem benötigt daher einen geringeren Bauraum als ein vergleichbarer Behälter mit einer unteren Behälterwandung ohne Einstülpung. Die Öffnung befindet sich bei dieser Ausgestaltung in dem als Einstülpung geformten Behälterboden, wobei die Fördervorrichtung weder den Behälterboden noch die in ihm befindliche Öffnung durchdringt.

An mehreren Ausführungsbeispielen wird die Erfindung näher erläutert. Es zeigen in
- Fig. 1: ein erfindungsgemäßes Tanksystem,
- Fig. 2-4: Befestigungen des Trägers, wobei nur Fig.3 als erfindungsgemäßes Ausführungsbeispiel gezeigt ist,
- Fig. 5: eine weitere Ausführungsform mit einem Träger.

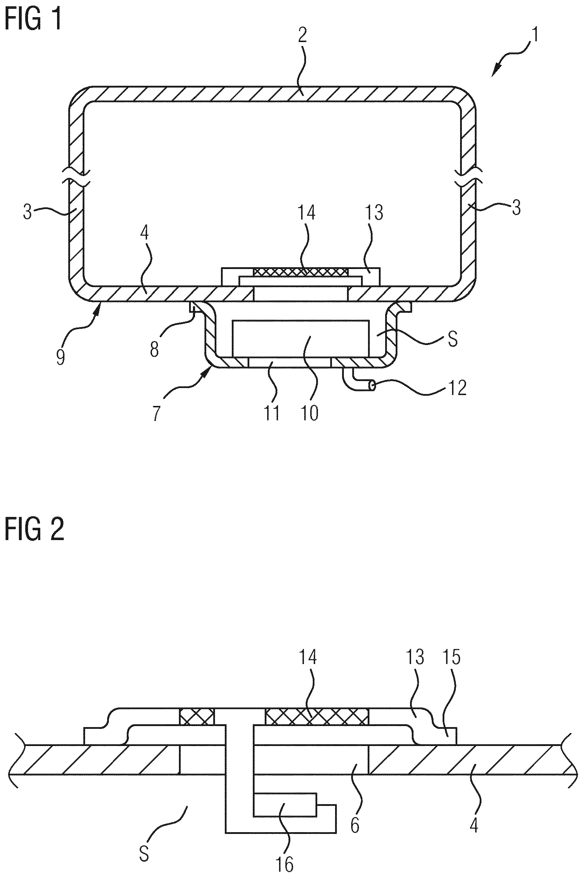

Figur 1 zeigt ein Tanksystem mit einem Behälter 1, der in Einbaulage eine obere Behälterwandung 2, einen nicht dargestellten Einfüllabschnitt für das Reduktionsmittel, seitliche Behälterwandungen 3 und eine untere Behälterwandung 4 besitzt. Die untere Behälterwandung 4 bildet den Boden des Behälters 1. Der Behälter 1 besteht aus Kunststoff. Es ist aber auch denkbar, den Behälter aus Metall herzustellen. In einem ebenen Bodenbereich 5 der unteren Behälterwandung 4 ist eine Öffnung 6 angeordnet. Außerhalb des Behälters 1 befindet sich eine Fördervorrichtung 7. Die Fördervorrichtung 7 besitzt einen sie umgebenden Flansch 8, der mit der Außenseite 9 des Behälters 1 verschweißt ist. Die Fördervorrichtung 7 umschließt zusammen mit der Außenseite 9 des Behälters 1 ein Volumen, so dass Fördervorrichtung 7 und Außenseite 9 einen Raum S bilden. Die Fördervorrichtung 7 ist damit vollständig außerhalb des Behälters 1 angeordnet und durchdringt diesen nicht. Durch die Öffnung 6 in der unteren Behälterwandung 4 ist der Raum S mit dem Inneren des Behälters 1 verbunden. Dadurch kann im Innern des Behälters gelagerte Harnstofflösung durch die Behälterwandung 4 nach außen in den Raum S fließen. Die Fördervorrichtung 7 besitzt ein Gehäuse 10, in oder an dem verschiedene nicht weiter dargestellte Komponenten, z. B. eine Pumpe, Druckregler, angeordnet sein können. Das Gehäuse 10 umfasst weiter einen Deckel 11, der das Gehäuse 10 verschließt. Mittels der Pumpe kann die im Raum S befindliche Harnstofflösung angesaugt und über einen Auslass 12 unter Druck in eine Förderleitung einer Abgasleitung zugeführt werden, in der die Harnstofflösung dem Abgas beigemischt wird. Aufgrund der exponierten Lage der Fördervorrichtung 7 an der Außenseite des Behälters 1 ist der Raum S anfälliger für Temperatureinwirkungen. Insbesondere bei tiefen Temperaturen friert der Raum S vor dem angrenzenden Volumen im Innern des Behälters 1 ein. Die damit einhergehende Volumenvergrößerung im Raum S führt dazu, dass sich das Volumen aufgrund der Öffnung 6 in Richtung der Behälters 1 ausdehnen kann, wodurch kritische Spannungen im Raum S und damit in der Fördervorrichtung vermieden werden. Die Öffnung 6 weist einen Träger 13 auf, der an der Öffnung 6 angeordnet ist. Der Träger 13 weist als Komponente einen Filter 14 auf, der in den Träger 13 integriert ist.

Figur 2 zeigt den Bodenbereich des Behälters 1 mit der unteren Behälterwandung 4, die eine Öffnung 6 enthält. Die außerhalb des Behälters 1 und unter der Öffnung 7 angeordnete Fördervorrichtung 7 ist nicht dargestellt. Die Öffnung 6 wird von dem Träger 13 überdeckt, wobei der Träger 13 eine Porosität von 40 % besitzt und somit als Filter 14 wirkt. Der Träger 13 besitzt einen umlaufenden Flansch 15, mit dem der Träger 13 mit der Behälterwandung 4 verschweißt ist. Der Träger weist weiter einen als Qualtitätssensor wirkenden Ultraschallsensor 16 auf, der in den Raum S hineinragt und dort die Qualität der Harnstofflösung misst.

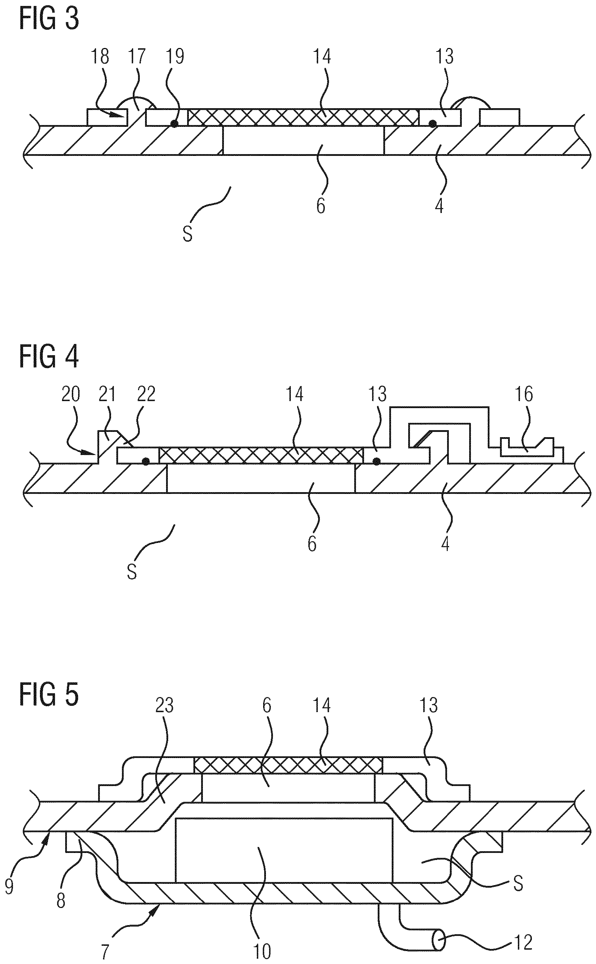

Nach Figur 3 sind erfindungsgemäß an der unteren Behälterwandung 4 zylinderförmige Erhebungen 17 angeordnet, die in Ausnehmungen am Träger 13 eingreifen. Mittels Heißverstemmen werden die Enden der Erhebungen 17 plastisch verformt, wodurch der Träger 13 lagefest an der unteren Behälterwandung 4 fixiert ist. Eine Dichtung 19 verhindert, dass zwischen der unteren Behälterwandung 4 und dem Träger 13 Harnstofflösung aus dem Inneren des Behälters 1 nach außen in den Raum S gelangen kann.

In Figur 4 ist der Träger 13 über eine Rastverbindung 20 an der unteren Behälterwandung 4 fixiert. Am Behälter 1 befindliche Rasthaken 21 greifen dazu in am Träger 13 ausgebildete Raststellen 22 ein. Am Träger 13 ist als weitere Komponente ein als Füllstandssensor arbeitender Ultraschallsensor 16 angeordnet. Der Träger 13 ist dabei so ausgebildet, dass der Ultraschallsensor 16 im Innern des Behälters 1 an einem für die Messung ausreichend tiefen Punkt, wie der unteren Behälterwandung, angeordnet ist.

Figur 5 zeigt ein Tanksystem welches sich zu dem nach Figur 1 dadurch unterscheidet, dass die untere Behälterwandung 4 in dem Bereich des Behälters 1, der mit der Fördervorrichtung 7 den Raum S bildet, zumindest eine in das Innere des Behälters gerichtete Einstülpung 23 auf.

## Patentansprüche

1. Tanksystem für ein Reduktionsmittel, umfassend einen Behälter für das Reduktionsmittel mit einer oberen Behälterwandung, seitlichen Behälterwandungen und einer unteren Behälterwandung, eine Fördervorrichtung, um das Reduktionsmittel anzusaugen und unter Druck über einen Auslass einem Abgas zuführbar bereitzustellen, wobei im Bodenbereich des Behälters (1) eine Öffnung (6) vorgesehen ist, dass an der Außenseite (9) des Behälters (1) die Fördervorrichtung (7) derart angeordnet ist, dass sie mit der Außenseite (9) des Behälters (1) einen Raum S bildet, wobei dieser Raum S über die eine Öffnung (6) mit dem Innern des Behälters (1) verbunden ist, so dass in dem Behälter (1) befindliches Reduktionsmittel aus dem Innern des Behälters (1) in den außerhalb des Behälters (1) befindlichen Raum S gelangen kann und durch die Fördervorrichtung (7) aus dem Raum S ansaugbar ist, dass ein von der Fördervorrichtung (7) getrennter Träger (13) an der Öffnung (6) vorgesehen ist und dass der Träger (13) mit weiteren Komponenten (14, 16) verbunden ist, wobei die Fördervorrichtung (7) einen sie umgebenden Flansch (8) aufweist, und der Flansch (8) zur Bildung des Raumes S mit der Außenseite (9) des Behälters (1) verbunden ist, **dadurch gekennzeichnet, dass** an der Öffnung (6) Mittel (15, 17, 18, 20) zum Verbinden des Trägers (13) mit der unteren Behälterwandung (4) angeordnet sind, wobei die Mittel als Erhebungen (17) ausgebildet sind, die entsprechende Ausnehmungen (18) des Trägers (13) durchdringen und mittels Heißverstemmen derart verformbar sind, dass der Träger (13) zur Öffnung (6) positioniert ist.

2. Tanksystem nach zumindest einem der vorhergehenden Ansprüche, **dadurch gekennzeichnet, dass** der Träger (13) eine Dichtung (19) besitzt, welche die Öffnung (6) umgibt.

3. Tanksystem nach zumindest einem der vorhergehenden Ansprüche, **dadurch gekennzeichnet, dass** der Träger (13) eine Porosität von 2 % bis 95 %, vorzugsweise 4 % bis 80 % und insbesondere von 6 % bis 50 % besitzt.

4. Tanksystem nach zumindest einem der vorhergehenden Ansprüche, **dadurch gekennzeichnet, dass** der Träger (13) mit einem Filter (14) verbunden ist.

5. Tanksystem nach zumindest einem der vorhergehenden Ansprüche, **dadurch gekennzeichnet, dass** der Träger (13) mit einem Füllstandssensor (16), vorzugsweise einem Ultraschallsensor verbunden ist.

6. Tanksystem nach zumindest einem der vorhergehenden Ansprüche, **dadurch gekennzeichnet, dass** der Träger (13) mit einem Qualitätssensor (16) verbunden ist.

7. Tanksystem nach Anspruch 6, **dadurch gekennzeichnet, dass** der Qualitätssensor (16) in den Raum S hineinragt.

8. Tanksystem nach zumindest einem der vorhergehenden Ansprüche, **dadurch gekennzeichnet, dass** der Träger (13) mit einer Heizvorrichtung verbunden ist.

## Claims

1. Tank system for a reducing agent, comprising a vessel for the reducing agent, having an upper vessel wall, lateral vessel walls, and a lower vessel wall, a conveying device in order for the reducing agent to be suctioned and to be provided under pressure so as to be suppliable by way of an outlet to an exhaust gas, wherein an opening (6) is provided in the base region of the vessel (1), in that the conveying device (7) is disposed on the outer side (9) of the vessel (1) in such a manner that said conveying device (7) conjointly with the outer side (9) of the vessel (1) forms a space S, wherein said space S by way of the one opening (6) is connected to the interior of the vessel (1) such that reducing agent located in the vessel (1) can make its way from the interior of the vessel (1) into the space S located outside the vessel (1) and is capable of being suctioned from the space S by the conveying device (7), in that a support (13) that is separate from the conveying device (7) is provided on the opening (6), and in that the support (13) is connected to further components (14, 16), wherein the conveying device (7) has a flange (8) surrounding the latter, and the flange (8) for forming the space S is connected to the outer side (9) of the vessel (1), **characterized in that** means (15, 17, 18, 20) for connecting the support (13) to the lower vessel wall (4) are disposed on the opening (6), wherein the means are configured as elevations (17) which penetrate corresponding clearances (18) of the support (13) and by means of heat caulking are deformable in such a manner that the support (13) is positioned in relation to the opening (6).

2. Tank system according to at least one of the preceding claims, **characterized in that** the support (13) has a seal (19) which surrounds the opening (6).

3. Tank system according to at least one of the preceding claims, **characterized in that** the support (13) has a porosity of 2% to 95%, preferably 4% to 80%, particularly of 6% to 50%.

4. Tank system according to at least one of the preceding claims, **characterized in that** the support (13) is connected to a filter (14).

5. Tank system according to at least one of the preceding claims, **characterized in that** the support (13) is connected to a filling level sensor (16), preferably an ultrasonic sensor.

6. Tank system according to at least one of the preceding claims, **characterized in that** the support (13) is connected to a quality sensor (16).

7. Tank system according to Claim 6, **characterized in that** the quality sensor (16) protrudes into the space S.

8. Tank system according to at least one of the preceding claims, **characterized in that** the support (13) is connected to a heating device.

## Revendications

1. Système de stockage d'un agent réducteur, comprenant un réservoir destiné à l'agent réducteur pourvu d'une paroi supérieure de réservoir, de parois latérales de réservoir et d'une paroi inférieure de réservoir, un dispositif de convoyage, destiné à aspirer l'agent réducteur et à le mettre à disposition en étant susceptible d'être amené sous pression via une sortie à un gaz d'échappement, dans la zone de fond du réservoir (1) étant prévu un orifice (6), en ce que sur la face extérieure (9) du réservoir (1), le dispositif de convoyage (7) est placé de sorte à ce qu'il forme avec la face extérieure (9) du réservoir (1) un espace S, ledit espace S étant relié par l'intermédiaire dudit un orifice (6) avec l'intérieur du réservoir (1), de sorte que de l'agent réducteur se trouvant dans le réservoir (1) puisse arriver de l'intérieur du réservoir (1) dans l'espace S se trouvant à l'extérieur du réservoir (1) et soit susceptible d'être aspiré par le dispositif de convoyage (7) hors de l'espace S, qu'un support (13) séparé du dispositif de convoyage (7) est prévu sur l'orifice (6) et que le support (13) est relié avec d'autres composants (14, 16), le dispositif de convoyage (7) comportant une bride (8) qui l'entoure, et pour former l'espace S, la bride (8) étant reliée avec la face extérieure (9) du réservoir (1), **caractérisé en ce que** sur l'orifice (6) sont placés des moyens (15, 17, 18, 20) destinés à relier le support (13) avec la paroi inférieure du réservoir (4), les moyens étant conçus sous la forme d'élévations (17), qui traversent des évidements (18) correspondants du support (13) et qui sont déformables par piquetage à chaud, de telle sorte que le support (13) soit positionnable par rapport à l'orifice (6).

2. Système de stockage selon au moins l'une quelconque des revendications précédentes, **caractérisé en ce que** le support (13) dispose d'un joint (19), lequel entoure l'orifice (6).

3. Système de stockage selon au moins l'une quelconque des revendications précédentes, **caractérisé en ce que** le support (13) fait preuve d'une porosité de 2 % à 95 %, de préférence de 4 % à 80 % et notamment de 6 % à 50 %.

4. Système de stockage selon au moins l'une quelconque des revendications précédentes, **caractérisé en ce que** le support (13) est relié avec un filtre (14).

5. Système de stockage selon au moins l'une quelconque des revendications précédentes, **caractérisé en ce que** le support (13) est relié avec un capteur de niveau (16), de préférence un capteur ultrasonique.

6. Système de stockage selon au moins l'une quelconque des revendications précédentes, **caractérisé en ce que** le support (13) est relié avec un capteur de qualité (16).

7. Système de stockage selon la revendication 6, **caractérisé en ce que** le capteur de qualité (16) saillit à l'intérieur de l'espace S.

8. Système de stockage selon au moins l'une quelconque des revendications précédentes, **caractérisé en ce que** le support (13) est relié avec un dispositif de chauffage.
